# EUROPÄISCHE PATENTSCHRIFT

(11) **EP 0 864 476 B1**
(45) Veröffentlichungstag und Bekanntmachung des Hinweises auf die Patenterteilung: **17.05.2006**
(21) Anmeldenummer: 98103855.7
(22) Anmeldetag: 05.03.1998
(51) Int. Cl.: B60T 11/32, B60T 17/00

(54) **Druckluftaufbereitungseinrichtung für Druckluftbeschaffungsanlagen auf Kraftfahrzeugen**
Pressure regulator for installation of compressed air production for vehicles
Régulateur de pression pour installation de production d'air comprimé dans des véhicules

(30) Priorität: 12.03.1997 DE 19710059
(43) Veröffentlichungstag der Anmeldung: 16.09.1998
(73) Patentinhaber: Haldex Brake Products GmbH, 69123 Heidelberg (DE)
(72) Erfinder: Blanz, Roland, 69253 Heiligkreuzsteinach (DE)
(74) Vertreter: Rehberg Hüppe + Partner

(56) Entgegenhaltungen:
- EP-A- 0 689 117
- WO-A-96/34785
- DE-C- 19 649 498
- US-A- 5 678 900

## Beschreibung

Die Erfindung betrifft eine Druckluftaufbereitungseinrichtung für Druckluftbeschaffungsanlagen von Kraftfahrzeugen, die eine Baueinheit aus einem elektropneumatischen Druckregler, einem integrierten elektropneumatisch ausgebildeten Mehrkreisschutzventil und einem Lufttrockner bildet, mit einem einen Eingangsanschluß und einen Auslaß aufweisenden gemeinsamen Gehäuse, in dem ein Durchtrittsraum für die herangeführte Druckluft vorgesehen ist, der über ein gesteuertes, als Sicherheitsventil ausgebildetes Auslaßventil in dessen Offenstellung mit der Atmosphäre verbunden ist, mit einem dem Durchtrittsraum nachgeschalteten Rückschlagventil, mit einer Einrichtung zum abwechselnden Öffnen und Schließen des Auslaßventils und mit mehreren gleichartigen den einzelnen Kreisen zugeordneten Steuereinheiten, die je ein entgegen der Strömungsrichtung schließendes Rückschlagventil und eine Betätigungseinheit zum gesteuerten Öffnen des Rückschlagventils aufweisen. Mechanisch-pneumatisch ausgebildete Ventile und Steuereinheiten gelten in der Fachwelt auf dem hier angesprochenen Gebiet als besonders betriebssicher, während bei elektropneumatisch ausgebildeten Teilen die Betriebssicherheit oft in Frage gestellt wird. Bei einem Spannungsausfall auf dem Kraftfahrzeug fallen elektropneumatisch ausgebildete Teile in der Regel aus.

Eine elektropneumatisch ausgebildete Druckluftaufbereitungseinrichtung der eingangs beschriebenen Art ist aus der DE 44 21 575 A1 bekannt. In einem gemeinsamen Gehäuse ist sowohl ein elektropneumatisch ausgebildeter Druckregler wie auch ein elektropneumatisch ausgebildetes Mehrkreisschutzventil und ein Lufttrockner vereinigt. Als Steuereinheiten für den Druckregler einerseits und die verschiedenen Kreise des Mehrkreisschutzventils andererseits dienen gleichartige Elemente in Form eines entgegen der Strömungsrichtung schließenden Rückschlagventils, dem eine Betätigungseinheit aus einem Kolben mit Stößel zugeordnet ist, der wiederum elektrisch vorgesteuert ist. Das Rückschlagventil des Druckreglers ist ein als Sicherheitsventil ausgebildetes Auslaßventil, welches also in die Atmosphäre öffnet, während die Rückschlagventile des Mehrkreisschutzventils in die einzelnen Betriebskreise öffnen. Das Rückschlagventil des Druckreglers kann beispielsweise einen Öffnungsdruck von 13 bar aufweisen, der zugleich den Sicherheitsdruck der Druckluftaufbereitungseinrichtung darstellt. Entsteht aus irgendwelchen Gründen im Durchtrittsraum der Druckluftaufbereitungseinrichtung ein höherer Druck, dann öffnet das Rückschlagventil des Druckreglers und begrenzt den Druck im Durchtrittsraum auf den eingestellten Sicherheitsdruck. Auch die den einzelnen Kreisen zugeordneten Rückschlagventile werden eingestellt und bestimmen somit den jeweiligen Kreissicherungsdruck. Die Einstellung der Rückschlagventile des Mehrkreisschutzventils im Verhältnis zur Einstellung des Rückschlagventils des Druckreglers ist problematisch. Wenn die Rückschlagventile des Mehrkreisschutzventils relativ hoch eingestellt werden, z. B. auf einen Öffnungsdruck von 10 bar, dann ergibt sich bei einem Ausfall der Elektrik ein nachfüllbarer Behälterdruck von lediglich 13 - 10 = 3 bar. Werden die Rückschlagventile der Kreise dagegen relativ niedrig eingestellt, z. B. auf einen Öffnungsdruck von 3 bar, dann können bei dem Ausfall eines Kreises infolge Auftretens eines Lecks auch die intakten Kreise lediglich mit einem Druck von 3 bar aufgefüllt bzw. nachgefüllt werden. Beide angesprochenen Defektfälle, nämlich Spannungsausfall einerseits und Auftreten eines Lecks in einem Kreis andererseits, stellen jedoch realistische Schadens- und Gefahrenfälle dar. Bei der bekannten Druckluftaufbereitungseinrichtung führt ein Spannungsausfall einerseits zu den beschriebenen Noteigenschaften und andererseits dazu, daß eine Regenerierung des Trockners nicht mehr stattfindet. Wird das Fahrzeug ohne Spannungsversorgung der Druckluftaufbereitungseinrichtung über längere Zeit weitergefahren, dann kann es bei winterlichen Temperaturen zum Einfrieren des nicht mehr regenerierten Trockners und damit zu einem Totalausfall der Bremsanlage kommen.

Es ist in der Patentanmeldung DE-A-196 49 498.2 bereits vorgeschlagen worden, daß zusätzlich zu dem elektropneumatischen Druckregler ein mechanisch-pneumatischer Druckregler integriert ist, dessen Abschaltdruck deutlich höher als der Abschaltdruck des elektropneumatischen Druckreglers eingestellt ist, daß der mechanisch-pneumatische Druckregler zugleich als Schaltventil für die Einschaltung einer Regenerationsphase für den Lufttrockner nach Erreichen seines Abschaltdruckes ausgebildet ist, und daß das als Sicherheitsventil ausgebildete Auslaßventil auf einen höheren Öffnungsdruck als der Abschaltdruck des mechanisch-pneumatischen Druckreglers eingestellt ist. Zusätzlich zu dem elektropneumatisch ausgebildeten Druckregler ist also noch ein mechanisch-pneumatisch ausgebildeter Druckregler in die Druckluftaufbereitungseinrichtung integriert. Während bisher im Stand der Technik die Entwicklung so verlaufen ist, daß der mechanisch-pneumatisch ausgebildete Druckregler durch einen elektropneumatisch ausgebildeten Druckregler ersetzt wurde, wird angesichts der oben beschriebenen Defekte auf einen mechanisch-pneumatisch ausgebildeten Druckregler zurückgegriffen, der aber zusätzlich zu dem elektropneumatisch ausgebildeten Druckregler angeordnet wird. Bei intakter Anlage, also bei ordnungsgemäßer Spannungsversorgung, arbeitet die Druckluft-aufbereitungseinrichtung über den elektropneumatisch ausgebildeten Druckregler. Der mechanisch-pneumatisch ausgebildete Druckregler spricht nicht an, weil dessen Abschaltdruck deutlich höher als der Abschaltdruck des elektropneumatisch ausgebildeten Druckreglers eingestellt ist. Unter einer deutlich höheren Einstellung wird eine Einstellung verstanden, die einen solchen Abstand von dem Abschaltdruck des elektropneumatisch ausgebildeten Druckreglers aufweist, daß auch beispielsweise auftretende Reibungen im pneumatischen Teil des elektropneumatisch ausgebildeten Druckreglers nicht zu einem Ansprechen des mechanisch-pneumatischen Druckreglers führen können. Der mechanisch-pneumatische Druckregler soll nur dann arbeiten, wenn tatsächlich ein Spannungsausfall vorliegt. Es versteht sich, daß bei ordnungsgemäßer Spannungsversorgung auch eine ordnungsgemäße Regeneration des Lufttrockners in bekannter Weise erfolgt. Aber auch dann, wenn ein Spannungsausfall vorliegt und der mechanisch-pneumatische Druckregler die Versorgung der Kreise steuert, findet eine zyklische Regeneration des Lufttrockners statt. Zu diesem Zweck ist der mechanisch-pneumatische Druckregler zugleich auch als Schaltventil für die Einschaltung der Regenerationsphase für den Lufttrockner ausgebildet. Diese Regenerationsphase wird nach Erreichen des Abschaltdruckes des mechanisch-pneumatischen Druckreglers eingenommen. Das als Sicherheitsventil ausgebildete Auslaßventil des elektropneumatisch ausgebildeten Druckreglers wird zusätzlich auf einen höheren Öffnungsdruck als der Abschaltdruck des mechanisch-pneumatischen Druckreglers eingestellt. Diese vergleichsweise zum Stand der Technik erhöhte Einstellung ist insgesamt vorteilhaft.

Der Erfindung liegt die Aufgabe zugrunde, eine elektropneumatisch ausgebildete Druckluftaufbereitungseinrichtung der eingangs beschriebenen Art, also mit Druckregler, Mehrkreisschutzventil und Trockner, bereitzustellen, die nicht nur eine Kreisbefüllung bei Spannungsausfall aufweist, sondern bei der bei gewollter oder ungewollter Spannungsunterbrechung eine Regeneration des Trockners möglich ist.

Erfindungsgemäß wird dies bei einer Druckluftaufbereitungseinrichtung der eingangs beschriebenen Art dadurch erreicht, daß zusätzlich zu dem elektropneumatischen Druckregler ein mechanisch-pneumatischer Druckregler integriert ist, der in seiner Funktion bei intakt mit Spannung versorgter Anlage blockiert ist, und daß der mechanisch-pneumatische Druckregler zugleich als Schaltventil für die Einschaltung einer Regenerationsphase für den Lufttrockner nach Erreichen seiner Abschaltstellung ausgebildet ist.

Die Erfindung geht von dem Gedanken aus, zusätzlich zu dem elektropneumatischen Druckregler zumindest rudimentär einen mechanisch-pneumatischen Druckregler in die Druckluftaufbereitungseinrichtung zu integrieren, dessen Funktion jedoch bei ordnungsgemäßer Spannungsversorgung unterdrückt bzw. blockiert wird. Immer dann, wenn die Druckluftaufbereitungseinrichtung bzw. deren Steuer- und Überwachungseinrichtung ordnungsgemäß mit Spannung versorgt wird, kann sich der mechanisch-pneumatische Druckregler nicht auswirken. Entfällt jedoch die Spannungsversorgung, was entweder im Notfall, also bei Eintritt eines Defektes, auftritt, oder üblicherweise oder auch während der Fahrt mutwillig herbeigeführt wird, insbesondere beim Abziehen des Zündschlüssels zum Zwecke des Stillsetzens des Fahrzeuges, dann wird die damit verursachte Unterbrechung der Spannungsversorgung in der Weise sinnvoll genutzt, daß nunmehr der mechanisch-pneumatische Druckregler die Funktion übernimmt. Dabei kommt es im wesentlichen auf eine volle Leerlaufphase zur Durchführung einer Regeneration des Trockners an. Es soll sichergestellt sein, daß z. B. beim Abstellen eines Fahrzeuges ganz bewußt die Regenerationsphase über den mechanisch-pneumatischen Druckregler ausgesteuert wird, damit der Trockner möglichst vollständig entfeuchtet wird und daher auch bei tiefen Temperaturen im Winter nicht die Probleme des Frostschutzes bzw. des Einfrierens auftreten. Besonders vorteilhaft ist es, wenn die Schaltspanne des mechanisch-pneumatischen Druckreglers größer gewählt wird als die Schaltspanne des elektropneumatischen Druckreglers, so daß bei Spannungsunterbrechung dann eine besonders intensive und weitgehende Regenerationsphase abläuft, die sich nicht netagiv auswirkt, weil es bei abgestelltem Fahrzeug durchaus zulässig ist, den Behälterdruck infolge der vergrößerten Schaltspanne vergleichsweise weiter absinken zu lassen. Es kann dabei die Möglichkeit genutzt werden, den mechanisch-pneumatischen Druckregler zugleich als Schaltventil für die Einschaltung der Regenerationsphase auszubilden. Die Anordnung eines gesonderten Schaltventiles ist nicht erforderlich.

Der Abschaltdruck des mechanisch-pneumatischen Druckreglers sollte in diesem Zusammenhang etwa gleich hoch oder niedriger als der Abschaltdruck des elektropneumatischen Druckreglers eingestellt sein, wobei das als Sicherheitsventil ausgebildete Auslaßventil auf einen höheren Öffnungsdruck als der Abschaltdruck des elektropneumatischen Druckreglers eingestellt ist. Wenn der Abschaltdruck des mechanisch-pneumatischen Druckreglers gleich hoch wie der Abschaltdruck des elektropneumatischen Druckreglers eingestellt ist, werden die Druckluftbehälter der einzelnen Kreise auch im Defektfalle, also bei Unterbrechung der Spannungsversorgung infolge Eintritt eines Defektes, sichergestellt. Es steht auch dann der volle Druck zur Verfügung. Auch die Schaltspanne und damit der relativ zum Abschaltdruck festgelegte Einschaltdruck kann gleich ausgebildet werden wie an dem elektropneumatischen Druckregler, so daß insoweit für den Fahrer auch im Defektfalle keine Nachteile hinsichtlich der Druckluftversorgung eintreten. Es wäre in einem solchen Falle freilich sinnvoll, dem Fahrer den Defekt in der Spannungsversorgung anzuzeigen, weil er an den Reaktionen des Fahrzeuges den Eintritt dieses Defektes nicht feststellen kann. Anders ist es zu beurteilen, wenn die Schaltspanne des mechanisch-pneumatischen Druckreglers bewußt größer gewählt wird oder wenn der Abschaltdruck des mechanisch-pneumatischen Druckreglers niedriger festgelegt wird als der Abschaltdruck des elektropneumatischen Druckreglers. Dann können je nach Ausbildung von einem feinfühligen Fahrer Unterschiede festgestellt werden, ohne daß die Gefahr besteht, daß das Fahrzeug nicht mehr handhabbar ist. In allen Fällen sollte die Schaltspanne des mechanisch-pneumatischen Druckreglers ausreichend groß bemessen sein, um bei Spannungsunterbrechung eine besonders intensive und langanhaltende Regenerationsphase durchzuführen, die vorteilhaft immer dann gewählt wird, wenn das Fahrzeug abgestellt wird.

Der mechanisch-pneumatische Druckregler kann einen auf einer Feder abgestützten Kolben aufweisen, der nach Überbrückung eines Freigangs ein geschlossenes Durchlaßventil zum Abschalten des gesteuerten Auslaßventils des elektropneumatischen Druckreglers in die Leerlaufphase öffnet. Es genügt, den mechanisch-pneumatischen Druckregler rudimentär zu verwirklichen bzw. die Steuereinheit des Auslaßventiles, die an sich zu dem elektropneumatischen Druckregler gehört, auch von seiten des mechanisch-pneumatischen Druckreglers anzusteuern, so daß die Anordnung von zwei Auslaßventilen nebeneinander entbehrlich wird.

Von der von dem mechanisch-pneumatischen Druckregler zum gesteuerten Auslaßventil führenden Leitung kann eine Rückströmleitung für die Regeneration des Lufttrockners ausgehen, in der ein Rückschlagventil vorgesehen ist. Damit ist auch der mechanisch-pneumatische Druckregler unmittelbar in der Lage, eine Regenerationsphase auszusteuern. Die Anordnung des Rückschlagventils verhindert die druckmäßige Beaufschlagung eines Teils des Kolbens des mechanisch-pneumatischen Druckreglers mit dem vollen Behälterdruck.

Die Feder des Kolbens kann auf einem Blockierkolben abgestützt sein, wobei dem Blockierkolben eine über ein Blockierventil beaufschlagbare Blockierkammer zugeordnet ist und das Blockierventil bei Spannungsversorgung in erregtem Zustand seine Durchgangsstellung einnimmt. Es versteht sich, daß die Blockierkammer immer dann beaufschlagt wird, wenn die Funktion des mechanisch-pneumatischen Druckreglers unterdrückt werden soll. Umgekehrt muß sichergestellt sein, daß bei Unterbrechung der Spannungsversorgung auch das Blockierventil seine Sperrstellung einnimmt und eine Entlüftung der Blockierkammer bewirkt, damit der mechanisch-pneumatische Druckregler in diesem Falle ordnungsgemäß arbeiten kann.

Es besteht die Möglichkeit, daß das die Regeneration bei mit Spannung versorgter Anlage steuernde Magnetventil als Blockierventil vorgesehen ist. Damit wird dieses Magnetventil, welches ohnehin vorhanden ist, für einen zweiten Zweck genutzt, und es erübrigt sich die gesonderte Anordnung eines Blockierventils.

In der zu dem Kolben führenden Leitung kann ein Blockierventil angeordnet sein, welches bei mit Spannung versorgter Anlage sperrt und bei nicht mit Spannung versorgter Anlage Durchgangsstellung einnimmt. Das Blockierventil ist in einer vom Raum nach dem Rückschlagventil zu der Kammer des Kolbens des mechanisch-pneumatischen Druckreglers führenden Leitung angeordnet.

Der Blockierkolben kann von zwei getrennten, aneinander abgestützten Kolben gebildet sein, sodaß somit zwei Blockierkammern vorgesehen sind, von denen die eine an den den Ventilmagneten umgebenden Raum und die andere an den den Ventilmagneten umgebenden Raum des Magnetventils angeschlossen ist, welches die Regeneration bei ordnungsgemäßer Spannungsversorgung steuert.

Es ist weiterhin möglich, daß ein gesondertes als Magnetventil ausgebildetes Blockierventil vorgesehen ist, das in einer vom Raum nach dem Rückschlagventil zu der Blockierkammer des Blockierkolbens führenden Leitung angeordnet ist. In diesem Falle muß das Blockierventil mit seinen beiden Schaltstellungen anders bzw. umgekehrt zu dem vorangehend beschriebenen Ausführungsbeispiels ausgebildet sein. Bei Spannungsversorgung muß es seine Durchgangsstellung einnehmen. Bei Spannungsunterbrechung muß es die Entlüftung der Blockierkammer herbeiführen, damit die Blockierung des mechanisch-pneumatischen Druckreglers aufgehoben ist.

Die Erfindung wird anhand verschiedener Ausführungsbeispiele weiter erläutert und beschrieben. Es zeigen:
- Fig. 1: eine schematisierte Darstellung der Druckluftaufbereitungseinrichtung in einer ersten Ausführungsform,
- Fig. 2: eine Detaildarstellung aus einer weiteren Ausführungsform der Druckluftaufbereitungseinrichtung gemäß Fig. 1 mit einem gesonderten Blockierventil, und
- Fig. 3: eine Detaildarstellung aus einer weiteren Ausführungsform der Druckluftaufbereitungseinrichtung gemäß Fig. 1 mit einem weiteren gesonderten Blockierventil.

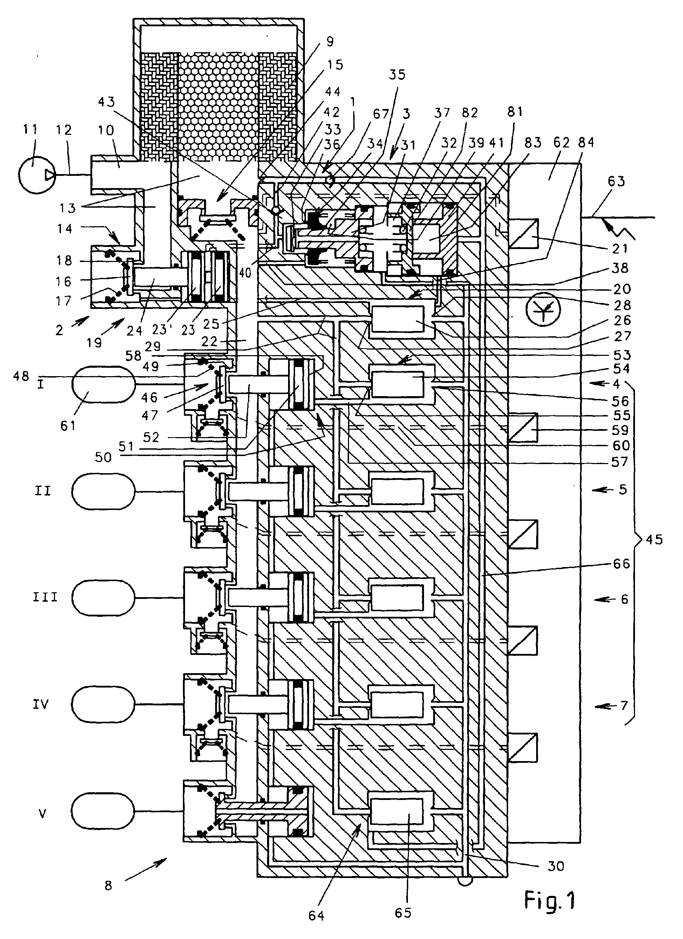

In Fig. 1 ist die Druckluftaufbereitungseinrichtung an einem ersten Ausführungsbeispiel erläutert. In einem gemeinsamen Gehäuse 1 ist ein elektropneumatischer Druckregler 2, ein rudimentärer mechanisch-pneumatischer Druckregler 3, Steuereinheiten 4, 5, 6, 7, 8 für einzelne Kreise sowie ein Lufttrockner 9 integriert vorgesehen. Am Gehäuse 1 ist ein Eingangsanschluß 10 vorgesehen, über den von einem Kompressor 11 über eine Leitung 12 gelieferte Druckluft der Druckluftaufbereitungseinrichtung zugeleitet wird. Mit dem Eingangsanschluß 10 steht ein Durchtrittsraum 13 in Verbindung, der einerseits zu einem gesteuerten Auslaßventil 14 und andererseits über den Lufttrockner 9 zu einem Rückschlagventil 15 führt. Das gesteuerte Auslaßventil 14 ist als Sicherheitsventil ausgebildet. Es besitzt ähnlich wie ein Rückschlagventil einen Ventilkörper 16, der auf einer einstellbaren Feder 17 abgestützt ist. Der Ventilkörper 16 arbeitet mit einem Gehäuserand 18 zusammen. Je nach der Einstellung der Feder 17 kann hier an dem Auslaßventil 14 ein Sicherheitsdruck eingestellt werden. Das Auslaßventil 14 führt in die Atmosphäre und verhindert, daß sich im Durchtrittsraum 13 ein höherer Druck als der eingestellte Sicherheitsdruck ausbilden kann. Funktionsmäßig gehört das Auslaßventil 14 sowohl zu dem elektropneumatischen Druckregler 2 wie auch zu dem mechanisch-pneumatischen Druckregler 3. Wenn man es baulich als Bestandteil des elektropneumatischen Druckreglers 2 ansieht, kann die funktionelle Integration des mechanisch-pneumatischen Druckreglers 3 als bauliche Integration des Schaltkolbens eines solchen mechanisch-pneumatischen Druckreglers 3 bezeichnet werden. Zu dem elektropneumatischen Druckregler 2 gehört ferner eine Einrichtung 19 zum abwechselnden Öffnen und Schließen des Auslaßventils 14. Weitere Bestandteile des elektropneumatischen Druckreglers 2 sind ein Magnetventil 20 und ein Drucksensor 21, der an einen Raum 22 nach dem Rückschlagventil 15 angeschlossen ist. Die Einrichtung 19 zum abwechselnden Öffnen und Schließen weist einen ersten Kolben 23 und einen zweiten Kolben 23' mit Stößel 24 auf, die zum Aufstoßen des Ventilkörpers 16 des Auslaßventiles 14 dienen. Von dem Magnetventil 20 führt eine Leitung 25 zu der dem Kolben 23 zugeordneten Steuerkammer. Das Magnetventil 20 weist einen Ventilmagneten 26, einen Einlaßsitz 27 und einen Auslaßsitz 28 auf. Der Einlaßsitz 27 ist über eine Leitung 29 in dauernder Verbindung zu dem Raum 22. Der Auslaßsitz 28 hat Verbindung zu einer Entlüftungsleitung 30.

Der baulich rudimentäre mechanisch-pneumatische Druckregler 3 weist einen in einer Bohrung des Gehäuses mittels einer Dichtung geführten Kolben 31 auf, der auf einer Feder 32 abgestützt ist. Der Kolben 31 ist einstückig zu einer Schaltstange 33 verlängert, die ein Durchlaßventil 34 betätigt, welches von einem Doppelventilkörper 35 und einem gehäuseseitigen Rand 36 gebildet wird. Der Kolben 31 ist zu Zwecken der Entlüftung hohl ausgebildet. Der Federraum 37 ist ebenfalls an eine Entlüftungsleitung 30 angeschlossen. Die Wirkfläche des Kolbens 31 steht über eine Leitung 38 in dauernder Verbindung zu dem Raum 22, so daß in der Kammer 39 der Druck des Raumes 22 herrscht. Jenseits des Durchlaßventiles 34 zweigt auch von dem mechanisch-pneumatischen Druckregler 3 eine Leitung 40 ab, die zu dem Trockner 9 und zu einer dem Kolben 23' zugeordneten Steuerkammer führt.

Die Feder 32 ist hier nicht gehäuseseitig abgestützt, sondern auf einem Blockierkolben 41. Der Blockierkolben 41 weist eine Blockierkammer 81 auf, die über das Magnetventil 64 mit Druckluft aus dem Raum 22 nach dem Rückschlagventil 15 belüftbar ist. Die Belüftung findet nur dann statt, wenn eine ordnungsgemäße Spannungsversorgung vorliegt. Mit dieser Belüftung wird die Feder 32 entweder auf Block zusammengeschoben oder aber ein Fortsatz des Blockierkolbens 41 oder ein zwischengelegter Teller o. dgl. legt sich an den Kolben 31 des mechanisch-pneumatischen Druckreglers 3, so daß der Kolben 31 keine Bewegung ausführen kann bzw. keine Möglichkeit besteht, daß der Doppelventilkörper 35 in die Offenstellung übergeht. Der Federraum 37 ist an die Entlüftungsleitung 30 angeschlossen und somit dauerhaft entlüftet. Es besteht auch die Möglichkeit, zwei Blockierkolben 41 und 82 hintereinanderliegend und mit gleichen Durchmessern, also gleich groß bemessenen Wirkflächen hintereinander anzuordnen, wie dies in Fig. 1 dargestellt ist. Damit wird zwischen den beiden Blockierkolben 41 und 82 eine zweite Blockierkammer 83 gebildet, die über eine Leitung 84 an den den Ventilmagneten 26 umgebenden Raum und damit auch an die Leitung 25 angeschlossen ist. Dies stellt eine zusätzliche Sicherheit dar. Bei ordnungsgemäßer Spannungsversorgung und Einsteuerung der Leerlaufphase durch den elektropneumatischen Druckregler 2, also bei Erregung des Magnetventils 20, wird somit auch die Blockierkammer 83 belüftet und auf jeden Fall sichergestellt, daß der mechanisch-pneumatische Druckregler 3 blockiert ist.

Statt eines einzelnen Blockierkolbens 41 oder der doppelten Anordnung von zwei Blockierkolben 41 und 82 hintereinander, besteht auch die Möglichkeit, einen Stufenkolben einzusetzen, also die Feder 32 auf einem Stufenkolben abzustützen, dessen beide der Feder abgekehrte Wirkflächen dann die beiden Blockierkammern 81 und 83 bilden können.

Die Leitung 40 setzt sich in einer Rückströmleitung 42 fort, in der ein Rückschlagventil 43 und eine Drossel 44 angeordnet sind. Die Leitung 42 führt über den Trockner 9 zum Auslaßventil 14 und dient der Regeneration des Trockners 9.

Die Steuereinheiten 4, 5, 6, 7, 8 sind identisch oder ähnlich ausgebildet und bilden insgesamt das elektropneumatisch ausgebildete Mehrkreisschutzventil 45. Die Steuereinheiten 4, 5, 6 und 7 sind identisch ausgebildet und mögen den Kreisen I, II, III und IV zugeordnet sein. Der Einfachheit halber ist hier nur die Steuereinheit 4 mit ihren Einzelheiten beschrieben. Die Steuereinheit 4 weist ein Rückschlagventil 46 auf, welches einen Ventilkörper 47 besitzt, der auf einer einstellbaren Feder 48 abgestützt ist und mit einem Gehäuserand 49 zusammenarbeitet.

Dem Rückschlagventil 46 ist eine Betätigungseinheit 50 zugeordnet, die einen Kolben 51 und einen Stößel 52 aufweist. Der Stößel 52 dient zur Betätigung des Rückschlagventils 46. Zu der Steuereinheit 4 gehört weiterhin noch ein Magnetventil 53 mit einem Ventilmagnet 54, einem Einlaßsitz 55 und einem Auslaßsitz 56, der ebenso wie der Federraum 37 des mechanisch-pneumatischen Druckreglers 3 an die Entlüftungsleitung 30 angeschlossen ist. Am Einlaßsitz 55 steht Druck über die Leitung 29 an. Vom Magnetventil 53 führt eine Leitung 57 zu der Wirkfläche 58 des Kolbens 51 der Betätigungseinheit 50. Zu der Steuereinheit 4 gehört schließlich noch ein Drucksensor 59, der über eine Leitung 60 den Druck nach dem Rückschlagventil 46 und damit in dem Behälter 61 des Kreises I mißt bzw. überwacht. Der Drucksensor 59 ist Bestandteil einer elektronischen Steuer- und Überwachungseinrichtung 62, die schematisch als integrierter Bestandteil der Druckluftaufbereitungseinrichtung angedeutet ist.

Die Steuereinheiten 5, 6, 7 des Mehrkreisschutzventils 45 sind identisch ausgebildet, angeordnet und angeschlossen, so daß hier auf die Beschreibung der Steuereinheit 4 verwiesen werden kann. Lediglich die Steuereinheit 8 ist nicht elektrisch vorgesteuert. Es ist hier ein Kreis V abgezweigt, dessen Aussteuerung rein mechanisch-pneumatisch verwirklicht ist.

Die Steuer- und Überwachungseinrichtung 62 wird mit elektrischer Spannung über die Leitung 63 versorgt.

Im Gehäuse 1 der Druckluftaufbereitungseinrichtung ist ein weiteres Magnetventil 64 mit Ventilmagnet 65 vorgesehen. Das Magnetventil 64 erfüllt eine Doppelfunktion und dient in erster Linie als Blockierventil für den mechanisch-pneumatischen Druckregler 3 und darüberhinaus der Regeneration des Lufttrockners 9. Bei Erregung des Ventilmagneten 65 wird dessen Einlaßventil geöffnet und dessen Auslaßventil geschlossen, so daß Druckluft aus dem Raum 22 über die Leitung 29 und die Rückströmleitung 66, ein Rückschlagventil 67 und die Drossel 44 den Trockner 9 rückwärts in der Regenerationsphase durchströmen kann. Dies ist jedenfalls bei ordnungsgemäßer Spannungsversorgung der Anlage und dann der Fall, wenn der elektropneumatische Druckregler 2 die Leerlaufphase eingesteuert hat, also das Auslaßventil 14 offen ist. Wird das Magnetventil 64 in den nicht-erregten Zustand überführt, so word die Regeneration beendet. Bei ordnungsgemäßer Spannungsversorgung wird der Leerlauf/Lastlauf-Zyklus über das Magnetventil 20 des elektropneumatischen Druckreglers 2 gesteuert. Die nicht-erregte Stellung des Ventilmagnets 26 (Fig. 1) ist dem Lastlauf zugeordnet. Dabei blockiert das Magnetventil 64 in erregtem Zustand den mechanisch-pneumatischen Druckregler 3. Die erregte Stellung des Ventilmagnets 26 ist dem Leerlauf zugeordnet. Dabei steuert das Magnetventil 64 in der erregten Stellung die Regeneration des Trockners 9, während in der nicht-erregten Stellung keine Regeneration stattfindet. Eine gewollte Unterbrechung der Spannungsversorgung, etwa infolge Abziehen des Zündschlüssels beim Abstellen des Fahrzeuges oder durch z.B. periodische Unterbrechung der Spannungsversorgung der Druckluftaufbereitungseinrichtung führt dazu, daß auch die beiden Magnetventile 20 und 64 in den nicht-erregten Zustand überführt werden. Damit schaltet der elektropneumatische Druckregler 2 auf Lastlauf und die Blockierung des mechanisch-pneumatischen Druckreglers 3 wird aufgehoben, sodaß dieser somit die Regelung des Lastlauf/Leerlaufzyklusses übernimmt. Wird durch den mechanisch-pneumatischen Druckregler 3 die Leerlaufphase eingeschaltet, so wird gleichzeitig eine Regenerationsphase des Trockners 9 ausgelöst, die nunmehr gemäß der Ausbildung des mechanisch-pneumatischen Druckreglers 3 abläuft. Besonders sinnvoll ist es, den mechanisch-pneumatischen Druckregler 3 mit einer größeren Schaltspanne zwischen Abschaltdruck und Einschaltdruck auszustatten als des elektropneumatischen Druckregler 2. So kann der elektropneumatische Druckregler 2 z. B. auf einen Abschaltdruck von 12 bar und einen Einschaltdruck von 11 bar ausgelegt bzw. damit betrieben werden, so daß die Schaltspanne 12 - 11= 1 bar beträgt. Wenn der mechanisch-pneumatische Druckregler 3 auf einen Abschaltdruck von z. B. 12 bar und einen Einschaltdruck von 10 bar ausgelegt ist, beträgt dessen Schaltspanne 12-10= 2 bar, ist also größer als die Schaltspanne des elektropneumatischen Druckreglers 2; Beim Arbeiten des mechanisch-pneumatischen Druckreglers 3 erfolgt also eine vergleichsweise weitergehendere Regeneration. Dies ist bedeutungvoll für die Probleme des Frostschutzes.

Durch die beschriebenen Möglichkeiten, eine Unterbrechung der Spannungsversorgung herbeizuführen, bietet sich weiterhin die Möglichkeit, bewußt, z.B. nach jeder x-ten Schaltung des elektropneumatischen Druckreglers 2, eine Spannungsunterbrechung herbeizuführen, um den mechanisch-pneumatischen Druckregler 3 zu bewegen und/oder einen Schaltvorgang am Ventilmagnet 26 des elektropneumatischen Druckreglers 2 und am Ventilmagnet 65 des Magnetventils 64 über den mechanisch-pneumatischen Druckregler 3 herbeizuführen, um seine Funktionstüchtigkeit und Funktionsbereitschaft zu überprüfen. Die Spannungsversorgung wird erst dann wiederhergestellt, wenn der Abschaltdruck des mechanisch-pneumatischen Druckreglers 3 erreicht ist. Dies wird mit dem Drucksensor 21 festgestellt.

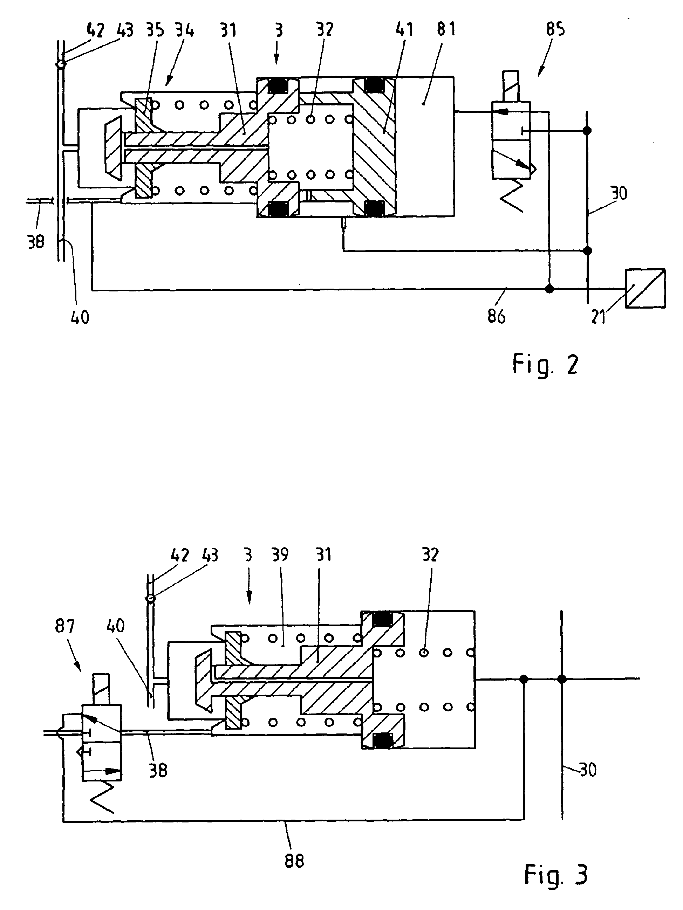

Fig. 2 zeigt eine Detaildarstellung einer weiteren Ausführungsform, die ansonsten im Zusammenhang mit den in Fig. 1 dargestellten Einzelheiten zu sehen ist. Es ist hier nur ein Blockierkolben 41 mit einer Blockierkammer 81 im Rahmen des mechanisch-pneumatischen Druckreglers 3 bzw. in Zuordnung zu dessen Kolben 31 vorgesehen. Ein gesondertes, als Magnetventil ausgebildetes Blockierventil 85 ist in eine Leitung 86 eingeschaltet, die von dem Raum 22 nach dem Rückschlagventil 15 bzw. von der damit verbundenen Leitung 38 zu der Blockierkammer 81 führt. Das gesonderte Blockierventil 85 ist so ausgebildet und geschaltet, daß es in erregtem Zustand, der nur bei ordnungsgemäßer Spannungsversorgung eintreten kann, die Blockierkammer 81 belüftet, so daß der Kolben 31 des mechanisch-pneumatischen Druckreglers 3 an einer Bewegung und damit der Druckregler 3 an der Ausübung einer Funktion gehindert ist. Wenn dagegen eine Spannungsunterbrechung stattfindet, geht auch das gesonderte. Blockierventil 85 in seine Entlüftungsstellung, d. h. die Blockierkammer 81 wird über die Entlüftungsleitung 30 entlüftet, so daß damit der Kolben 31 entlastet wird und der mechanisch-pneumatische Druckregler 3 seine Funktion ausführen kann.

Fig. 3 zeigt ein weiteres gesondertes Blockierventil 87, welches ebenfalls als Magnetventil ausgebildet ist und die beiden dargestellten Stellungen aufweist. Dieses Blockierventil 87 ist jedoch in der Leitung 38 angeordnet, die vom Raum 22 nach dem Rückschlagventil 15 zu der Kammer 39 des Kolbens 31 führt. In diesem Falle genügt es, die Feder 32 des Kolbens 31 gehäuseseitig abzustützen.

Das Blockierventil 87 ist gleichsam umgekehrt bzw. gegensätzlich ausgebildet und geschaltet wie das Blockierventil 85 der Fig. 2. Das Blockierventil 87 nimmt in erregtem Zustand, der nur bei ordnungsgemäßer Spannungsversorgung vorliegen bzw. durch die Steuer- und Überwachungseinrichtung 62 eingesteuert werden kann, seine Entlüftungsstellung ein, d. h. der Teil der Leitung 38, der zu der Kammer 39 führt, wird über eine Leitung 88 mit der Entlüftungsleitung 30 verbunden. Damit ist die Kammer 39 in diesem Zustand entlüftet und der andere Teil der Leitung 38, der mit dem Raum 22 in Verbindung steht, abgesperrt. Bei Unterbrechung der Spannungsversorgung geht auch das Blockierventil 87 in seine nicht-erregte Stellung über. Damit besteht Durchgang in den beiden Teilen der Leitung 38, so daß die Kammer 39 mit Druck aus dem Raum 22 beaufschlagt wird. Der mechanisch-pneumatische Druckregler 3 kann in der Folge seine Funktion ordnungsgemäß ausführen.

Die Druckluftaufbereitungseinrichtung gemäß der Fig. 1 arbeitet bei intakter Anlage so, wie dies in der eingangs genannten Anmeldung beschrieben ist. Die insoweit abweichende Funktion in Verbindung mit dem Blockierkolben 41 ist aus den vorstehenden Darlegungen überschaubar bzw. für einen Fachmann verständlich, so daß auf eine erneute Beschreibung verzichtet werden kann. Auch die Funktion der Druckluftaufbereitungseinrichtungen gemäß den Fig. 2 und 3, die nur angedeutet sind, ist in Verbindung mit gesonderten Blockierventilen 85 bzw. 87 überschaubar.

### BEZUGSZEICHENLISTE

- 1 -: Gehäuse
- 2 -: elektropn. Druckregler
- 3 -: mech.-pneum. Druckregler
- 4 -: Steuereinheit
- 5 -: Steuereinheit
- 6 -: Steuereinheit
- 7 -: Steuereinheit
- 8 -: Steuereinheit
- 9 -: Lufttrockner
- 10 -: Eingangsanschluß

- 11 -: Kompressor
- 12 -: Leitung
- 13 -: Durchtrittsraum
- 14 -: Auslaßventil
- 15 -: Rückschlagventil
- 16 -: Ventilkörper
- 17 -: Feder
- 18 -: Gehäuserand
- 19 -: Einrichtung
- 20 -: Magnetventil

- 21 -: Drucksensor
- 22 -: Raum
- 23 -: Kolben
- 24 -: Stößel
- 25 -: Leitung
- 26 -: Ventilmagnet
- 27 -: Einlaßsitz
- 28 -: Auslaßsitz
- 29 -: Leitung
- 30 -: Entlüftungsleitung

- 31 -: Kolben
- 32 -: Feder
- 33 -: Schaltstange
- 34 -: Durchlaßventil
- 35 -: Doppelventilkörper
- 36 -: Rand
- 37 -: Federraum
- 38 -: Leitung
- 39 -: Kammer
- 40 -: Leitung

- 41 -: Blockierkolben
- 42 -: Rückströmleitung
- 43 -: Rückschlagventil
- 44 -: Drossel
- 45 -: Mehrkreisschutzventil
- 46 -: Rückschlagventil
- 47 -: Ventilkörper
- 48 -: Feder
- 49 -: Gehäuserand
- 50 -: Betätigungseinheit

- 51 -: Kolben
- 52 -: Stößel
- 53 -: Magnetventil
- 54 -: Ventilmagnet
- 55 -: Einlaßsitz
- 56 -: Auslaßsitz
- 57 -: Leitung
- 58 -: Wirkfläche
- 59 -: Drucksensor
- 60 -: Leitung

- 61 -: Behälter
- 62 -: Steuer- und Überwachungseinrichtung
- 63 -: elektrische Leitung
- 64 -: Magnetventil
- 65 -: Ventilmagnet
- 66 -: Rückströmleitung
- 67 -: Rückschlagventil

- 81 -: Blockierkammer
- 82 -: Blockierkolben
- 83 -: Blockierkammer
- 84 -: Leitung
- 85 -: Blockierventil
- 86 -: Leitung
- 87 -: Blockierventil
- 88 -: Leitung

## Patentansprüche

1. Druckluftaufbereitungseinrichtung für Druckluftbeschaffungsanlagen von Kraftfahrzeugen, die eine Baueinheit aus einem elektropneumatischen Druckregler (2), einem integrierten elektropneumatisch ausgebildeten Mehrkreisschutzventil (45) und einem Lufttrockner (9) bildet, mit einem einen Eingangsanschluß (10) und einen Auslaß aufweisenden gemeinsamen Gehäuse (1), in dem ein Durchtrittsraum (13) für die herangeführte Druckluft vorgesehen ist, der über ein gesteuertes, als Sicherheitsventil ausgebildetes Auslaßventil (14) in dessen Offenstellung mit der Atmosphäre verbunden ist, mit einem dem Durchtrittsraum (13) nachgeschalteten Rückschlagventil (15), mit einer Einrichtung (19) zum abwechselnden Öffnen und Schließen des Auslaßventils (14) und mit mehreren gleichartigen den einzelnen Kreisen (I, II , III, etc.) zugeordneten Steuereinheiten (4 , 5, 6 , etc.), die je ein entgegen der Strömungsrichtung schließendes Rückschlagventil (46) und eine Betätigungseinheit (50) zum gesteuerten Öffnen des Rückschlagventils (46) aufweisen, **dadurch gekennzeichnet, daß** zusätzlich zu dem elektropneumatischen Druckregler (2) ein mechanisch-pneumatischer Druckregler (3) integriert ist, der in seiner Funktion bei intakt mit Spannung versorgter Anlage blockiert ist, und daß der mechanisch-pneumatische Druckregler (3) zugleich als Schaltventil für die Einschaltung einer Regenerationsphase für den Lufttrockner (9) nach Erreichen seiner Abschaltstellung ausgebildet ist.

2. Druckluftaufbereitungseinrichtung nach Anspruch 1, **dadurch gekennzeichnet, daß** der Abschaltdruck des mechanisch-pneumatischen Druckreglers (3) etwa gleich hoch oder niedriger als der Abschaltdruck des elektropneumatischen Druckreglers (2) eingestellt ist, und daß das als Sicherheitsventil ausgebildete Auslaßventil (14) auf einen höheren Öffnungsdruck als der Abschaltdruck des elektropneumatischen Druckreglers (2) eingestellt ist.

3. Druckluftaufbereitungseinrichtung nach Anspruch 1 oder 2, **dadurch gekennzeichnet, daß** der mechanisch-pneumatische Druckregler (3) einen auf einer Feder (32) abgestützten Kolben (31) aufweist, der nach Überbrückung eines Freigangs ein geschlossenes Durchlaßventil (34) zum Abschalten des gesteuerten Auslaßventils (14) des elektropneumatischen Druckreglers (2) in die Leerlaufphase öffnet.

4. Druckluftaufbereitungseinrichtung nach Anspruch 1 oder 3, **dadurch gekennzeichnet, daß** von der von dem mechanisch-pneumatischen Druckregler (3) zum gesteuerten Auslaßventil (14) führenden Leitung (40) eine Rückströmleitung (42) für die Regeneration des Lufttrockners (9) ausgeht, in der ein Rückschlagventil (43) vorgesehen ist.

5. Druckluftaufbereitungseinrichtung nach einem der Ansprüche 1 bis 4, **dadurch gekennzeichnet, daß** die Feder (32) des Kolbens (31) auf einem Blockierkolben (41; 82) abgestützt ist, und daß dem Blockierkolben (41; 82) eine über ein Blockierventil (64; 85) beaufschlagbare Blockierkammer (81) zugeordnet ist, wobei das Blockierventil (64; 85) bei Spannungsversorgung in erregtem Zustand seine Durchgangsstellung einnimmt.

6. Druckluftaufbereitungseinrichtung nach Anspruch 5, **dadurch gekennzeichnet, daß** das die Regeneration bei mit Spannung versorgter Anlage steuernde Magnetventil (64) als Blockierventil vorgesehen ist.

7. Druckluftaufbereitungseinrichtung nach einem der Ansprüche 2 bis 6, **dadurch gekennzeichnet, daß** in einer zu dem Kolben (31) führenden Leitung (38) ein Blockierventil (87) angeordnet ist, welches bei mit Spannung versorgter Anlage sperrt und bei nicht mit Spannung versorgter Anlage Durchgangsstellung einnimmt.

8. Druckluftaufbereitungseinrichtung nach einem der Ansprüche 1 bis 7, **dadurch gekennzeichnet, daß** der Blockierkolben (41) von zwei getrennten, aneinander abgestützten Kolben (41, 82) gebildet ist und so zwei Blockierkammern (81, 83) vorgesehen sind, von denen die eine (83) an den den Ventilmagneten (26) umgebenden Raum und die andere (81) an den den Ventilmagneten (65) umgebenden Raum des Magnetventils (64) angeschlossen ist.

9. Druckluftaufbereitungseinrichtung nach einem der Ansprüche 1 bis 8, **dadurch gekennzeichnet, daß** ein gesondertes als Magnetventil ausgebildetes Blockierventil (85) vorgesehen ist, das in einer vom Raum (22) zu der Blockierkammer (81) des Blockierkolbens (41) führenden Leitung (86) angeordnet ist.

10. Druckluftaufbereitungseinrichtung nach einem der Ansprüche 1 bis 8, **dadurch gekennzeichnet, daß** ein gesondertes als Magnetventil ausgebildetes Blockierventil (87) vorgesehen ist, das in einer vom Raum (22) zu der Kammer (39) des Kolbens (31) des mechanisch-pneumatischen Druckreglers (3) führenden Leitung (38) angeordnet ist.

## Claims

1. Compressed air control device for a source of compressed air on motor vehicles, forming a unit of an electro-pneumatic unloader (2), an integrated electro-pneumatic multi-circuit control valve (45) and an air-drier (9), comprising:
an inlet (10) and an outlet provided in a common housing (1) in which a chamber (13) for the passage of compressed air is provided, the chamber being connected to the atmosphere via a controlled outlet valve (14) in its opened position in form of a safety valve,
a check valve (15) being positioned downstream of the chamber (13),
a means (19) for alternatingly opening and closing the outlet valve (14) and
a plurality of control units (4, 5, 6 etc.) of the same kind allocated to the respective circuits (I, II, III, etc.), the control units each comprising a check valve (46) closing contrary to the flow direction and a means (50) for controlled opening of the check valve (46),
**characterized**
**in that** a mechanical-pneumatic unloader (3) is integrated in addition to the electro-pneumatic unloader (2), the function of the mechanical-pneumatic unloader being locked in case of the source of compressed air being correctly supplied with power, and in that the mechanical-pneumatic unloader (3) is also designed as an on-off valve for the activation of a regeneration phase of the air-drier (9) after the outlet valve being opened.

2. The device of claim 1, **wherein** the switch-off pressure of the mechanical-pneumatic unloader is adjusted about as high or lower than the switch-off pressure of the electro-pneumatic unloader, and wherein the outlet valve formed as a safety valve is adjusted to an opening pressure higher than the switch-off pressure of the electro-pneumatic unloader.

3. The device of claim 2, **wherein** the mechanical-pneumatic unloader comprises a piston supported on a spring, the piston after moving over an ineffective part of its stroke opening a closed overflow valve in order to open the controlled outlet valve of the electro-pneumatic unloader to run in the idle phase.

4. The device of claim 1, **wherein** a regeneration line for the regeneration of the air-drier starts from a line, which leads from the mechanical-pneumatic unloader to the controlled outlet valve, a check valve being provided in the regeneration line.

5. The device of claim 3, **wherein** the spring of the piston is supported on a locking piston, and wherein a locking chamber being biasable by the locking valve is associated to the locking piston, the locking valve taking its passage position in case of power supply in excitation.

6. The device of claim 5, **wherein** the solenoid valve controlling the regeneration in case of power supply of the source of compressed air is provided as locking valve.

7. The device of claim 3, **wherein** a locking valve is located in a line leading to the piston, the locking valve locking in case of power supply of the source of compressed air and taking its passage position in case of no power supply of the source of compressed air.

8. The device of claim 5, **wherein** the locking piston is formed by two separated pistons supporting each other and in that way two locking chambers are provided, one locking chamber being connected to the room surrounding the valve magnet and the other locking chamber being connected to the room surrounding the valve magnet of the solenoid valve.

9. The device of claim 8, **wherein** a special locking valve being formed as a solenoid valve is provided, the locking valve being located in the line leading from the chamber to the locking chamber of the locking piston.

10. The device of claim 8, **wherein** a special locking valve being formed as a solenoid valve is provided, the locking valve being located in the line leading from the chamber to the chamber of the mechanical-pneumatic unloader.

## Revendications

1. Dispositif de traitement d'air comprimé pour installations de production d'air comprimé de véhicules automobiles, qui forme une unité de construction constituée d'un régulateur de pression (2) électropneumatique, d'une soupape de protection multicircuit (45) intégrée, réalisée de manière électropneumatique, et d'un séchoir à air (9), comportant un boîtier (1) commun avec un raccord d'entrée (10) et une sortie, dans lequel est prévu un compartiment de passage (13) pour l'air comprimé amené, lequel est relié à l'atmosphère par une soupape d'échappement (14) en position ouverte, commandé et réalisé sous la forme d'une soupape de sécurité, comportant un clapet de non-retour (15) couplé en aval du compartiment de passage (13), comportant un dispositif (19) pour l'ouverture et la fermeture alternées de la soupape d'échappement (14) et comportant plusieurs unités de commande (4, 5, 6, etc.) de même type, associées aux différents circuits (I, II, III, etc.), lesquelles comportent chacune un clapet de non-retour (46) se fermant dans le sens contraire au sens d'écoulement et une unité d'actionnement (50) pour l'ouverture commandée du clapet de non-retour (46), **caractérisé en ce qu'**outre le régulateur de pression électropneumatique (2) est intégré un régulateur de pression mécanique et pneumatique (3) dont le fonctionnement est bloqué lorsque l'installation est parfaitement alimentée en tension, et **en ce que** le régulateur de pression mécanique et pneumatique (3) est réalisé en même temps sous la forme d'une soupape de commutation pour l'enclenchement d'une phase de régénération du séchoir à air (9) lorsqu'est atteinte sa position de coupure.

2. Dispositif de traitement d'air comprimé selon la revendication 1, **caractérisé en ce que** la pression de coupure du régulateur de pression mécanique et pneumatique (3) est réglée sensiblement égale ou inférieure à la pression de coupure du régulateur de pression électropneumatique (2), et **en ce que** la soupape d'échappement (14), réalisée comme soupape de sécurité, est réglée sur une pression d'ouverture supérieure à la pression de coupure du régulateur de pression électropneumatique (2).

3. Dispositif de traitement d'air comprimé selon la revendication 1 ou 2, **caractérisé en ce que** le régulateur de pression mécanique et pneumatique (3) comporte un piston (31) prenant appui sur un ressort (32), qui après franchissement d'une course libre ouvre une soupape de passage (34) fermée pour la coupure de la soupape d'échappement (14) commandée du régulateur de pression électropneumatique (2) dans la phase de marche à vide.

4. Dispositif de traitement d'air comprimé selon la revendication 1 ou 3, **caractérisé en ce que** de la conduite (40) menant du régulateur de pression mécanique et pneumatique (3) à la soupape d'échappement (14) commandée, part une conduite de retour (42) pour la régénération du séchoir à air (9), dans laquelle est prévu un clapet de non-retour (43).

5. Dispositif de traitement d'air comprimé selon l'une des revendications 1 à 4, **caractérisé en ce que** le ressort (32) du piston (31) est soutenu sur un piston de blocage (41 ; 82), et **en ce qu'**au piston de blocage (41 ; 82) est associée une chambre de blocage (81) pouvant être sollicitée par une soupape de blocage (64 ; 85), la soupape de blocage (64 ; 85) prenant sa position de passage en cas d'alimentation en tension, à l'état excité.

6. Dispositif de traitement d'air comprimé selon la revendication 5, **caractérisé en ce que** la soupape magnétique (64), commandant la régénération lorsque l'installation est alimentée en tension, est prévue en tant que soupape de blocage.

7. Dispositif de traitement d'air comprimé selon l'une des revendications 2 à 6, **caractérisé en ce que** dans une conduite (38) menant au piston (31) est disposée une soupape de blocage (87) qui se ferme lorsque l'installation est alimentée en tension, et prend une position de passage lorsque l'installation n'est pas alimentée en tension.

8. Dispositif de traitement d'air comprimé selon l'une des revendications 1 à 7, **caractérisé en ce que** le piston de blocage (41) est formé par deux pistons (41, 82) séparés, s'appuyant l'un sur l'autre, et il est ainsi prévu deux chambres de blocage (81, 83) dont une (83) est raccordée à l'espace entourant l'aimant de soupape (26) et l'autre (81) est raccordée à l'espace de la soupape magnétique (64), entourant l'aimant de soupape (65).

9. Dispositif de traitement d'air comprimé selon l'une des revendications 1 à 8, **caractérisé en ce qu'**il est prévu une soupape de blocage (85) séparée, réalisée sous la forme d'une soupape magnétique, qui est disposée dans une conduite (86) menant du compartiment (22) à la chambre de blocage (81) du piston de blocage (41).

10. Dispositif de traitement d'air comprimé selon l'une des revendications 1 à 8, **caractérisé en ce qu'**il est prévu une soupape de blocage (87) séparée, réalisée sous la forme d'une soupape magnétique, qui est disposée dans une conduite (38) menant du compartiment (22) à la chambre (39) du piston (31) du régulateur de pression mécanique et pneumatique (3).
